# EUROPÄISCHE PATENTSCHRIFT

(11) **EP 1 817 092 B1**
(45) Veröffentlichungstag und Bekanntmachung des Hinweises auf die Patenterteilung: **26.03.2008**
(21) Anmeldenummer: 05802316.9
(22) Anmeldetag: 08.10.2005
(51) Int. Cl.: B01D 21/00, B01D 43/00

(54) **ABSCHEIDEVORRICHTUNG**
SEPARATING DEVICE
DISPOSITIF DE SEPARATION

(30) Priorität: 15.10.2004 DE 102004050490; 21.10.2004 DE 102004056831; 02.04.2005 DE 102005015175
(43) Veröffentlichungstag der Anmeldung: 15.08.2007
(73) Patentinhaber: G&W GmbH Maschinen- und Anlagenbau, 27404 Zeven (DE)
(72) Erfinder: FREIHERR VON WOLFF, Frank, 27419 Sittensen (DE)
(74) Vertreter: Kloiber, Thomas
(86) Internationale Anmeldenummer: PCT/EP2005/010866
(87) Internationale Veröffentlichungsnummer: WO 2006/042657

(56) Entgegenhaltungen:
- BE-A- 505 907
- DE-A1- 2 105 216
- DE-A1- 10 030 338
- FR-A- 1 184 760
- FR-A- 2 466 177
- GB-A- 831 432
- US-A- 3 396 850

## Beschreibung

Die Erfindung betrifft eine Abscheidevorrichtung zur Abtrennung von Steinen, Sand oder anderen Verunreinigungen aus einer mit Zuckerrüben oder einem anderen zu reinigenden Gut beladenen Spülflüssigkeit,
- mit einem Abscheidebehälter, an den eine Einlauföffnung zum Einlauf der mit dem Gut und den Verunreinigungen beladenen Spülflüssigkeit und eine Auslauföffnung zum Auslauf der mit dem gereinigten Gut beladenen Spülflüssigkeit anschließen,
- mit einer im Abscheidebehälter angeordneten, rotierenden Siebeinrichtung, die ein in die Spülflüssigkeit teilweise eintauchendes, im wesentlichen kegel- oder zylindermantelförmiges, um eine im wesentlichen horizontale oder gegenüber der Horizontalen leicht geneigte Rotationsachse rotierendes Sieb aufweist, so dass das zu reinigende Gut radial innerhalb des Siebes im wesentlichen in axialer Richtung durch die Siebeinrichtung spülbar ist und Verunreinigungen nach unten durch das Sieb hindurchfallen, um sich im Abscheidebehälter zu sammeln,
- und mit einer Transporteinrichtung zum Abtransport der abgeschiedenen Verunreinigungen aus dem Abscheidebehälter.

Bei bekannten Abscheidevorrichtungen besteht der Abscheidebehälter aus einer ortsfest aufgestellten Wanne, in der die Siebeinrichtung rotiert. Abgeschiedene Verunreinigungen sammeln sich auf dem Boden der Wanne. Von dort müssen sie mittels der Transporteinrichtung ständig abtransportiert werden, weil sonst die Rotation der Siebeinrichtung früher oder später blockiert würde. Bei bekannten Abscheidevorrichtungen sind zum Abtransport der abgeschiedenen Verunreinigungen Schaufeln vorgesehen, die in den radialen Zwischenraum zwischen der rotierenden Siebeinrichtung und der starren Wanne eingreifen und die am Boden der Wanne angesammelten Verunreinigungen aus diesem Bereich herausschieben. Da die Verunreinigungen im wesentlichen aus Sand und Steinen bestehen, kommt es bei den bekannten Abscheidevorrichtungen zu einem erheblichen Verschleiß an der Wanne und den Transporteinrichtungen. Blockaden zwischen der Wanne und der Transporteinrichtung inbegriffen der Siebeinrichtung werden somit auch bei kurzzeitigen Stillstand der Maschine vermieden.

Aufgabe der Erfindung ist es, eine Abscheidevorrichtung der eingangs genannten Art im Hinblick auf einen möglichst störungs- und wartungsarmen Betrieb zu verbessern.

Diese Aufgabe löst die Erfindung dadurch, dass der Abscheidebehälter um eine im wesentlichen horizontale oder gegenüber der Horizontalen leicht geneigte Achse rotierbar angeordnet und auf seiner Innenseite mit Transporttaschen zur Aufnahme der Verunreinigungen versehen ist. Damit ist die Transporteinrichtung zum Abtransport der abgeschiedenen Verunreinigungen im Abscheidebehälter integriert. Durch einfache Rotation des Abscheidebehälters gelangen die im Bodenbereich des Abscheidebehälters angesammelten Verunreinigungen in die Transporttaschen und werden bei der weiteren Rotation durch die Transporttaschen nach oben transportiert, wo sie aus den Transporttaschen wieder herausfallen und durch geeignete Fördermittel entfernt werden können. Außer der Rotation des Abscheidebehälters ist keine weitere Antriebsmechanik erforderlich. Da die Verunreinigungen allein durch die Schwerkraft in die Transporttaschen hineinfallen, tritt ein wesentlicher geringerer Verschleiß als beim Stand der Technik auf, wo die Verunreinigungen vom Boden des Abscheidebehälters abgekratzt werden müssen.

In einer bevorzugten Ausführungsform ist der rotierende Abscheidebehälter und die rotierende Siebeinrichtung drehfest miteinander verbunden. In Ausgestaltung der Erfindung sind die Transporttaschen in einem in axialer Richtung begrenzten ersten einlaufseitigen Seitenbereich des Abscheidebehälters angeordnet und der Abscheidebehälter weist eine Fördereinrichtung zur Förderung der in Bodennähe befindlichen, mit Verunreinigungen beladenen Spülflüssigkeit in Richtung des genannten ersten Seitenbereichs auf. Durch die Begrenzung der Transporttaschen auf den Seitenbereich können diese vorteilhaft kleiner und materialsparender ausgebildet sein, wobei zudem beim Entleeren der Transporttaschen die herausfallenden Verunreinigungen auf den genannten ersten Seitenbereich begrenzt sind. Daher kann die nachfolgende, zum Abtransport der Verunreinigungen vorgesehene Einrichtung sich ebenfalls auf den Seitenbereich beschränken und muss sich nicht über die gesamte axiale Länge des Abscheidebehälters erstrecken. Der weitere Abtransport der Verunreinigungen kann beispielsweise durch eine oberhalb des Flüssigkeitsspiegels in axialer Richtung in den Innenraum des mit Transporttaschen versehenen ersten Seitenbereichs hineinragende Schurre geschehen, die die aus den Transporttaschen herausfallenden abgeschiedenen Verunreinigungen aufnimmt und in axialer Richtung wegführt.

Die für die Begrenzung der Transporttaschen auf den ersten Seitenbereich erforderliche Fördereinrichtung zur Förderung der mit Verunreinigungen beladenen Spülflüssigkeit in Richtung des Seitenbereichs kann auf vorteilhaft einfache Weise aus einem auf der radialen Innenseite des im wesentlichen trommelförmigen Abscheidebehälters angeordneten ersten Schneckenförderer bestehen. Ein solcher Schneckenförderer kann auf einfachste Weise durch schraubenförmig angeordnete, von der Innenseite des Abscheidebehälters radial nach innen ragende Trennwände dargestellt werden.

Die Erfindung kann durch die Maßnahme noch verbessert werden, dass radial innerhalb des ersten Schneckenförderers ein durch eine Zwischentrommel vom ersten Schneckenförderer getrennter zweiter Schneckenförderer vorgesehen ist, der die mit Verunreinigungen beladene Spülflüssigkeit zunächst entgegen der Förderrichtung des ersten Schneckenförderers von dem mit den Transporttaschen versehenen ersten Seitenbereich weg zu einem axial gegenüberliegenden zweiten Seitenbereich des Abscheidebehälters fördert, der eine radiale Verbindung zwischen den Bereichen der beiden Schneckenförderer aufweist, so dass die Spülflüssigkeit anschließend vom ersten Schneckenförderer zum ersten, mit Transporttaschen versehenen Seitenbereich gefördert wird. Diese Maßnahme ist insbesondere deshalb vorteilhaft, weil der Bereich des ersten Schneckenförderers durch die Zwischentrommel vom übrigen Innenraum des Abscheidebehälters weitgehend getrennt ist und sich daher die geförderte Spülflüssigkeit nicht mit der restlichen Spülflüssigkeit mischen und Wirbel bilden kann.

Besonders vorteilhaft ist eine Anordnung, bei der der mit den Transporttaschen versehene erste Seitenbereich die Einlauföffnung zum Einlauf der mit dem Gut und den Verunreinigungen beladenen Spülflüssigkeit aufweist. Dabei entspricht nämlich die Einlaufrichtung im wesentlichen der Richtung des mit der durchströmenden Flüssigkeit über einen großen Bereich der gesamten axialen Strecke direkt kommunizierenden zweiten Schneckenförderers, so dass der zweite Schneckenförderer der axialen Hauptströmungsrichtung der Spülflüssigkeit eine radial nach außen (im wesentlichen nach unten) gerichtete Radialkomponente überlagert.

Besonders vorteilhaft aber ist die Anordnung der Einlauföffnung am ersten Seitenbereich in Verbindung mit der Maßnahme, dass die vom ersten Schneckenförderer zum ersten Seitenbereich geförderte Spülflüssigkeit im ersten Seitenbereich nach oben umgelenkt wird, so dass sich die nach oben gerichtete Strömung mit der im wesentlichen horizontalen Strömung der durch die Einlauföffnung einlaufenden Spülflüssigkeit überlagert. Die hierdurch erzeugte Aufwärtskomponente direkt hinter der Einlauföffnung hat den Vorteil, dass das durch die Einlauföffnung eintretende zu reinigende Gut durch die Vertikalkomponente der Gesamtströmung in der Schwebe gehalten und durch die Horizontalkomponente zur Siebeinrichtung gefördert wird, während größere Steine aufgrund ihres höheren spezifischen Gewichtes entgegen der Vertikalkomponente nach unten absinken und von den Transporttaschen aufgenommen werden. Auf diese Weise werden größere Steine direkt nach der Einlauföffnung abgeschieden, so dass sie nicht in den Innenraum der Siebeinrichtung eintreten, wo sie möglicherweise vom Sieb zurückgehalten und letztendlich vom zu reinigenden Gut nicht abgetrennt werden.

Andererseits treten in die Siebeinrichtung nur Sand und kleinste Steine ein, die widerrum durch die von den beiden Schneckenförderern erzeugten Strömung mitgerissen werden und auf diese Weise schließlich den Transporttaschen zugeführt werden.

In einer ersten vorteilhaften Ausführungsform der Erfindung besteht das Sieb der Siebeinrichtung aus im wesentlichen achsparallelen, trommelförmig angeordneten Stäben, wobei benachbarte Stäbe jeweils eine Lücke zum Durchtritt der Verunreinigungen begrenzen. Insbesondere bei der Reinigung von Zuckerrüben hat diese Anordnung den Vorteil, dass die Stäbe von den Zuckerrüben zu Schwingungen angeregt werden, wodurch sich etwa angelagerte Rübenstücke und Verunreinigungen lösen, die ansonsten im Laufe der Zeit zur Verstopfung der Siebeinrichtung führen würden. Ein Nachteil diese Ausführungsform besteht jedoch darin, dass relativ viele Stücke der Zuckerrüben ebenfalls durch die Stäbe fallen.

In einer alternativen Ausführungsform der Erfindung ist vorgesehen, dass das Sieb der Siebeinrichtung aus gebogenen Lochblechen besteht. Diese haben den Vorteil, dass weniger organische Bestandteile, d. h. im wesentlichen Zuckerrübenstücke durch die Löcher der Siebeinrichtung hindurchfallen. Ein Nachteil der Lochbleche besteht jedoch darin, dass sie durch Stücke des zu reinigenden Gutes oder der Verunreinigungen verstopft werden können.

Um diesen Nachteil zu beseitigen, schlägt eine Weiterbildung der Erfindung vor, dass eine ortsfeste, in den Innenraum des rotierenden Abscheidebehälters ragende Abstreifvorrichtung zum Abstreifen von an den Lochblechen haftenden Materialien vorgesehen ist.

Ausführungsbeispiele der Erfindung werden nachfolgend anhand der Zeichnungen näher erläutert. Die Figuren zeigen im Einzelnen:
- Fig. 1:: eine schematische Darstellung einer erfindungsgemäßen Abscheidevorrichtung im Schnitt;
- Fig. 2:: eine Teilansicht derselben Abscheidevorrichtung in einer teilweise geschnittenen perspektivischen Ansicht;
- Fig. 3:: eine Darstellung wie Fig. 1 einer anderen Ausführungsform der Erfindung.

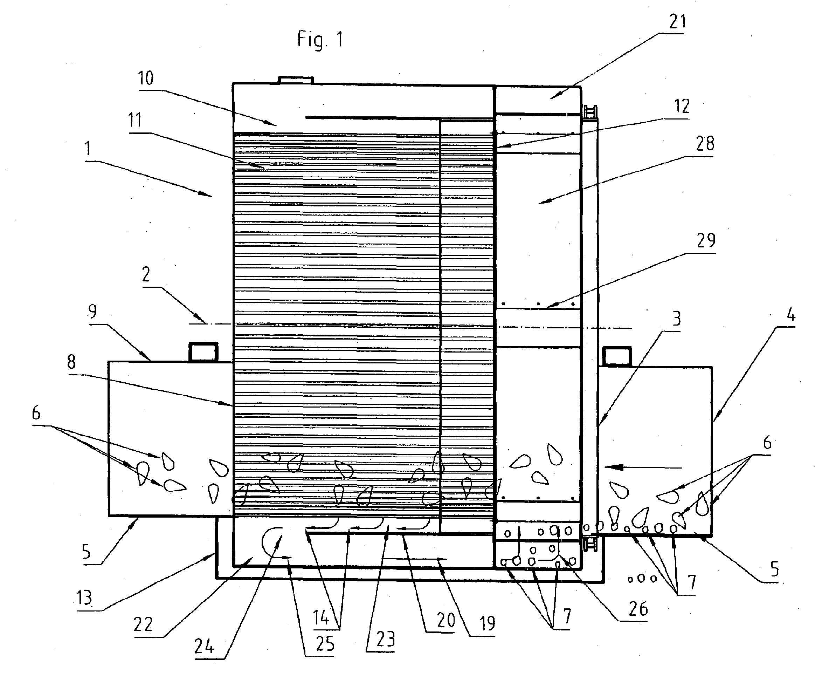

Die in Fig. 1 gezeigte Abscheidevorrichtungen weist einen im wesentlichen trommelförmigen Abscheidebehälter 1 auf, der um eine Rotationsachse 2 drehbar gelagert ist. Der Abscheidebehälter 1 ist auf der rechten Seite mit einer Einlauföffnung 3 versehen, in die ein Einlaufrohr 4 mündet. Im Einlaufrohr 4 befindet sich Wasser, welches hier als Spülflüssigkeit 5 dient und einerseits mit dem zu reinigenden Gut 6, im vorliegenden Fall Zuckerrüben, und andererseits mit Verunreinigungen 7, im vorliegenden Fall vor allem Steine und Sand, beladen ist. Auf der gegenüberliegenden Axialseite ist der Abscheidebehälter 1 mit einer Auslauföffnung 8 versehen, durch die das mit den gereinigten Zuckerrüben 6 versehene Wasser 5 in ein Auslaufrohr 9 gelangt.

Im Inneren des Abscheidebehälters 1 ist dieser mit einer rotierenden Siebeinrichtung 10 ausgestattet, die im einfachsten Fall aus einem trommelförmigen Sieb 11 besteht, und somit koaxial um die selbe Rotationsachse 2 dreht. Der rotierende Abscheidebehälter 1 ist auf einer Lagerwanne 13 drehbar gelagert und abgestützt. Die Lagerwanne 13 dient auch zur Aufnahme eventuell aus dem Abscheidebehälter 1 austretender Spülflüssigkeit.

Das in Fig. 1 gezeigte Sieb besteht aus achsparallelen Stäben mit Zwischenräumen zum Durchtritt von Spülflüssigkeit und Verunreinigungen. Die Strömungsrichtung der durchtretenden Spülflüssigkeit ist durch Pfeile 14 angedeutet. Die Spülflüssigkeit 5 steht im Innenraum des Abscheidebehälters 1 bis in eine beliebige Höhe unterhalb der Achse. Das Sieb 11 taucht somit teilweise in die Spülflüssigkeit 5 ein.

Auch wenn die Siebeinrichtung 10 des dargestellten Ausführungsbeispiels ein zylindermantelförmiges Sieb 11 mit genau horizontal angeordneter Rotationsachse 2 aufweist, umfasst die Erfindung doch auch etwa kegelmantelförmige Siebe, deren Rotationsachse gegenüber der horizontalen geneigt angeordnet sein kann, wobei der Neigungswinkel beispielsweise 10° oder sogar mehr betragen könnte. Entsprechendes gilt im Prinzip auch für die Form und Neigung des Abscheidebehälters.

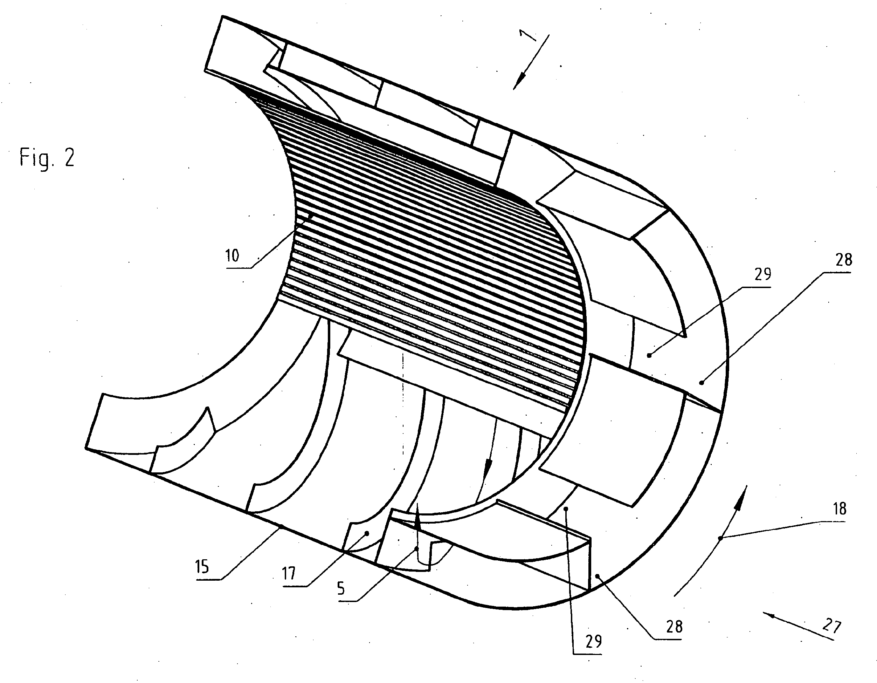

Wie man am besten in Fig. 2 erkennt, ist der Abscheidebehälter 1 in einem radial äußeren Bereich 15 mit einem ersten Schneckenförderer 16 versehen, der aus radial nach innen vorstehenden, schraubenförmig angeordneten Trennblechen 17 gebildet wird. Insgesamt sind sechs Trennbleche 17 über den Umfang des trommelförmigen Abscheidebehälters 1 verteilt. Wird der Abscheidebehälter 1 in Drehrichtung 18 in Bewegung gesetzt, so wird die Spülflüssigkeit 5 auf der aufsteigenden Seite des Abscheidebehälters 1 angehoben und durch die Trennbleche 17 in Axialrichtung 19 (Fig. 1) zu den Transporttaschen an der Einlaufseite gefördert. Radial innerhalb des ersten Schneckenförderers 16 ist der Abscheidebehälter 1 mit einer Zwischentrommel 20 versehen, die sich in axiale Richtung über einen mittleren Bereich des Abscheidebehälters 1 erstreckt, ohne in einen auf der Einlaufseite angeordneten ersten Seitenbereich 21 und ohne in einen auf der Auslaufseite angeordneten zweiten Seitenbereich 22 hineinzuragen. In einem radialen Bereich innerhalb der Zwischentrommel 20 ist ein zweiter Schneckenförderer angeordnet, der in den Figuren nicht explizit dargestellt ist. Der zweite Schneckenförderer fördert die durch das Sieb 11 durchtretende Spülflüssigkeit in Pfeilrichtung 14 zunächst axial nach links in Richtung auf den zweiten Seitenbereich 22 zu. Im zweiten Seitenbereich 22 ist eine radiale Verbindungsöffnung 24 angeordnet, durch die hindurch die Spülflüssigkeit gemäß Pfeil 25 aus dem radial inneren Bereich 23 des zweiten Schneckenförderers in den radial äußeren Bereich 15 des ersten Schneckenförderers 16 gelangt und dabei ihre axiale Fließrichtung um 180° umgekehrt. Anschließend wird die Spülflüssigkeit in Axialrichtung 19 zur Einlaufseite in den ersten Seitenbereich 21 gefördert, wo sie gemäß den Pfeilen 26 nach oben umgelenkt wird.

Aufgrund der im ersten Seitenbereich 21 erzeugten Vertikalkomponente hält die aufwärtsströmende Spülflüssigkeit die in Hauptförderrichtung 27 aus dem Einlaufrohr 4 durch die Einlauföffnung 3 mit der Spülflüssigkeit 5 eingespülten Zuckerrüben 6 in der Schwebe, so dass sie weiter nach links aus dem ersten Seitenbereich 21 heraus in den Bereich der Siebeinrichtung 10 eintreten. Die durch die Einlauföffnung 3 ebenfalls eingespülten Steine 7 sinken aber aufgrund ihres höheren spezifischen Gewichtes entgegen der vertikal nach oben gerichteten Strömung senkrecht nach unten ab, wo sie zunächst auf dem tiefsten Abschnitt des Abscheidebehälters 1 zu liegen kommen. Im ersten Seitenbereich 21 ist der Abscheidebehälter 1 auf seiner radialen Innenseite mit sechs über seinen Umfang verteilten Transporttaschen 28 versehen, die auf ihrer in Drehrichtung 18 zugewandten Seite mit jeweils einer Öffnung 29 versehen sind. Bei der Drehung des Abscheidebehälters 1 in Drehrichtung 18 werden somit die sich im untersten Abschnitt des ersten Seitenbereichs 21 ansammelnden Steine in die Transporttaschen 28 eingesammelt und bei der weiteren Drehung des Abscheidebehälters 1 nach oben gefördert. An der Oberseite entleeren sich die Transporttaschen 28 aufgrund der Schwerkraft, wobei die Steine 7 herunterfallen. Um die Steine 7 endgültig aus dem Bereich des Abscheidebehälters 1 zu entfernen, ist eine nicht gezeigte Schurre vorgesehen, die von rechts axial in den ersten Seitenbereich 21 hineinragt und die herabfallenden Steine 7 auffängt und abtransportiert.

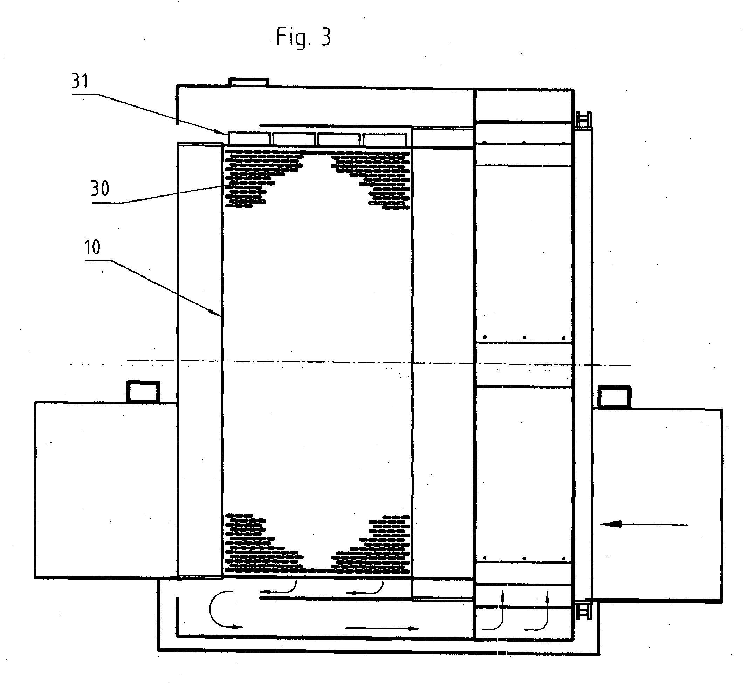

Fig. 3 zeigt eine andere Ausführungsform einer erfindungsgemäßen Vorrichtung, bei der die Siebvorrichtung 10 ein abgewandeltes Sieb 30 aufweist, welches aus Lochblechen besteht. Da bei Lochblechen die Löcher leicht verstopfen, weil sich z. B. Rübenstücke oder Verunreinigungen darin verklemmen oder festsetzen, ist ein Abstreifer 31 vorgesehen, der ortsfest angeordnet ist und während das Sieb 30 rotiert die anhaftenden Hindernisse abstreift, wodurch die Löcher wieder frei und durchgängig werden.

### BEZUGSZEICHENLISTE

- 1: Abscheidebehälter
- 2: Rotationsachse
- 3: Einlauföffnung
- 4: Einlaufrohr
- 5: Spülflüssigkeit / Wasser
- 6: Gut / Zuckerrüben
- 7: Verunreinigungen / Steine
- 8: Auslauföffnung
- 9: Auslaufrohr
- 10: Siebeinrichtung
- 11: Sieb
- 12:
- 13: Lagerwanne
- 14: Pfeil
- 15: radial äußerer Bereich
- 16: erster Schneckenförderer
- 17: Trennblech
- 18: Drehrichtung
- 19: Axialrichtung
- 20: Zwischentrommel
- 21: erster Seitenbereich
- 22: zweiter Seitenbereich
- 23: radial innerer Bereich
- 24: radiale Verbindungsöffnung
- 25: Pfeil
- 26: Pfeil
- 27: Hauptförderrichtung
- 28: Transporttasche
- 29: Öffnung
- 30: Sieb
- 31: Abstreifer

## Patentansprüche

1. Abscheidevorrichtung zur Abtrennung von Steinen, Sand oder anderen Verunreinigungen (7) aus einer mit Zuckerrüben oder einem anderen zu reinigenden Gut (6) beladenen Spülflüssigkeit (5),
- mit einem Abscheidebehälter (1), an den eine Einlauföffnung (3) zum Einlauf der mit dem Gut (6) und den Verunreinigungen (7) beladenen Spülflüssigkeit (5) und einer Auslauföffnung (8) zum Auslauf der mit dem gereinigten Gut (6) beladenen Spülflüssigkeit (5) anschließen;
- mit einer im Abscheidebehälter (1) angeordneten rotierenden Siebeinrichtung (10), die ein in die Spülflüssigkeit (5) teilweise eintauchendes, im wesentlichen kegel- oder zylindermantelförmiges, um eine im wesentlichen horizontale oder gegenüber der horizontalen leicht geneigte Rotationsachse (2) rotierendes Sieb (11,30) aufweist, so dass das zu reinigende Gut (6) radial innerhalb des Siebes (11,30) im wesentlichen in axialer Richtung (27) durch die Siebeinrichtung (10) spülbar ist und Verunreinigungen (7) nach unten durch das Sieb (11,30) hindurchfallen, um sich im Abscheidebehälter (1) zu sammeln,
- und mit einer Transporteinrichtung (28) zum Abtransport der abgeschiedenen Verunreinigungen (7) aus dem Abscheidebehälter (1),
**dadurch gekennzeichnet, dass** der
Abscheidebehälter (1) um eine im wesentlichen horizontale oder gegenüber der Horizontalen leicht geneigte Achse (2) rotierbar angeordnet und auf seiner Innenseite mit Transporttaschen (28) zur Aufnahme der Verunreinigungen (7) versehen ist.

2. Abscheidevorrichtung nach Anspruch 1, **dadurch gekennzeichnet, dass** der rotierende Abscheidebehälter (1) und die rotierende Siebeinrichtung (10) drehfest miteinander verbunden sind.

3. Abscheidevorrichtung nach Anspruch 1 oder 2, **dadurch gekennzeichnet, dass** die Transporttaschen (28) in einem in axialer Richtung begrenzten ersten Seitenbereich (21) des Abscheidebehälters (1) angeordnet sind und der Abscheidebehälter (1) eine Fördereinrichtung (16) zur Förderung der in Bodennähe befindlichen, mit Verunreinigungen (7) beladenen Spülflüssigkeit (5) in Richtung (19) des genannten ersten Seitenbereichs (21) aufweist.

4. Abscheidevorrichtung nach Anspruch 3, **dadurch gekennzeichnet, dass** die Fördereinrichtung einen auf der radialen Innenseite des im wesentlichen trommelförmigen Abscheidebehälters (1) angeordneten ersten Schneckenförderer (16) umfasst.

5. Abscheidevorrichtung nach Anspruch 4, **dadurch gekennzeichnet, dass** radial innerhalb des ersten Schneckenförderers (16) ein durch eine Zwischentrommel (20) vom ersten Schneckenförderer (16) getrennter zweiter Schneckenförderer vorgesehen ist, der die mit Verunreinigungen (7) beladene Spülflüssigkeit (5) zunächst entgegen der Förderrichtung (19) des ersten Schneckenförderers (16) von dem mit den Transporttaschen (28) versehenen ersten Seitenbereich (21) weg zu einem axial gegenüberliegenden zweiten Seitenbereich (22) des Abscheidebehälters (1) fördert, der eine radiale Verbindung zwischen den radialen Bereichen (15, 23) der beiden Schneckenförderer aufweist, so dass die Spülflüssigkeit (5) anschließend vom ersten Schneckenförderer (16) zu dem ersten, mit Transporttaschen (28) versehenen Seitenbereich (21) gefördert wird.

6. Abscheidevorrichtung nach Anspruch 5, **dadurch gekennzeichnet, dass** an den mit den Transporttaschen (28) versehene erste Seitenbereich (21) die Einlauföffnung (3) zum Einlauf der mit dem Gut (6) und den Verunreinigungen (7) beladenen Spülflüssigkeit (5) anschließt.

7. Abscheidevorrichtung nach Anspruch 6, **dadurch gekennzeichnet, dass** die vom ersten Schneckenförderer (16) zum ersten Seitenbereich (21) geförderte Spülflüssigkeit (5) im ersten Seitenbereich (21) nach oben umgelenkt wird, so dass sich die nach oben gerichtete Strömung mit der im wesentlichen horizontalen Strömung (27) der durch die Einlauföffnung (3) einlaufenden Spülflüssigkeit (5) überlagert.

8. Abscheidevorrichtung nach einem der vorhergehenden Ansprüche, **dadurch gekennzeichnet, dass** das Sieb (11) der Siebeinrichtung (10) aus im wesentlichen achsparallelen, trommelförmig angeordneten Stäben besteht, wobei benachhbarte Stäbe jeweils eine Lücke zum Durchtritt von Spülflüssigkeit (5) und Verunreinigungen (7) begrenzen.

9. Abscheidevorrichtung nach einem der Ansprüche 1 bis 7, **dadurch gekennzeichnet, dass** das Sieb (30) der Siebeinrichtung (10) aus gebogenen Lochblechen besteht.

10. Abscheidevorrichtung nach Anspruch 9, **dadurch gekennzeichnet, dass** eine ortsfeste, in den Innenraum des Siebes (30) ragende Abstreifvorrichtung (31) zum Abstreifen von an der Innenseite der Lochbleche haftenden Materialien vorgesehen ist.

## Claims

1. Separating apparatus for separating stones, sand or other impurities (7) from a rinsing liquid (5) laden with sugar beets or some other crop (6) to be cleaned,
- having a separating tank (1), to which an inflow port (3), for the inflow of the rinsing liquid (5) laden with the crop (6) and the impurities (7), and an outflow port (8), for the outflow of the rinsing liquid (5) laden with the cleaned crop (6), connect.
- having a rotary screening device (10), which is disposed in the separating tank (1) and which has a substantially conical or cylindrical-shell-shaped screen (11, 30) which intrudes partially into the rinsing liquid (5) and rotates about a rotational axis (2) that is substantially horizontal or is slightly inclined relative to the horizontal, so that the crop (6) to be cleaned can be rinsed radially within the screen (11, 30) substantially in the axial direction (27) by the screening device (10) and impurities (7) drop down through the screen (11, 30) to collect in the separating tank (1),
- and having a transport device (28) for transporting the separated impurities (7) away from the separating tank (1),
**characterized in that** the separating tank (1) is disposed rotatably about an axis (2) that is substantially horizontal or is slightly inclined relative to the horizontal, and is provided on its inner side with transport bins (28) for the reception of the impurities (7).

2. Separating apparatus according to Claim 1, **characterized in that** the rotary separating tank (1) and the rotary screening device (10) are connected to each other in a rotationally secure manner.

3. Separating apparatus according to Claim 1 or 2, **characterized in that** the transport bins (28) are disposed in a first side region (21) of the separating tank (1), which is delimited in the axial direction, and the separating tank (1) has a conveying device (16) for conveying the rinsing liquid (5) located close to the bottom and laden with impurities (7) in the direction (19) of the said first side region (21).

4. Separating apparatus according to Claim 3, **characterized in that** the conveying device comprises a first screw conveyor (16) disposed on the radial inner side of the substantially drum-shaped separating tank (1).

5. Separating apparatus according to Claim 4, **characterized in that** radially within the first screw conveyor (16) a second screw conveyor is provided, which is separated from the first screw conveyor (16) by an intermediate drum (20) and which conveys the rinsing liquid (5) laden with impurities (7) initially counter to the direction of conveyance (19) of the first screw conveyor (16), away from the first side region (21) provided with the transport bins (28), to an axially opposite second side region (22) of the separating tank (1), which second side region has a radial connection between the radial regions (15, 23) of the two screw conveyors, so that the rinsing liquid (5) is then conveyed from the first screw conveyor (16) to the first side region (21) provided with transport bins (28).

6. Separating apparatus according to Claim 5, **characterized in that** connecting to the first side region (21) provided with the transport bins (28) is the inflow port (3) for the inflow of the rinsing liquid (5) laden with the crop (6) and the impurities (7).

7. Separating apparatus according to Claim 6, **characterized in that** the rinsing liquid (5) conveyed from the first screw conveyor (16) to the first side region (21) is deflected upwards in the first side region (21), so that the upwardly directed flow overlaps with the substantially horizontal flow (27) of the rinsing liquid (5) flowing in through the inflow port (3).

8. Separating apparatus according to one of the preceding claims, **characterized in that** the screen (11) of the screening device (10) consists of substantially axially parallel rods arranged in a drum shape, adjacent rods respectively delimiting a gap for the passage of rinsing liquid (5) and impurities (7).

9. Separating apparatus according to one of Claims 1 to 7, **characterized in that** the screen (30) of the screening device consists of curved perforated plates.

10. Separating apparatus according to Claim 9, **characterized in that** a fixed scraping apparatus (31), jutting into the interior of the screen (30), is provided to scrape off materials adhering to the inner side of the perforated plates.

## Revendications

1. Dispositif séparateur destiné à séparer des pierres, du sable ou d'autres impuretés (7) d'un fluide de rinçage (5) chargé de betteraves sucrières ou d'un autre produit à nettoyer (6),
- avec un réservoir séparateur (1) auquel sont raccordées une ouverture d'entrée (3) destinée à l'entrée du liquide de rinçage (5) chargé du produit (6) et des impuretés (7) et une ouverture de sortie (8) destinée à la sortie du liquide de rinçage (5) chargé du produit (6) nettoyé ;
- avec un dispositif de crible rotatif (10), disposé dans le réservoir séparateur (1), qui présente un crible (11, 30) tournant autour d'un axe de rotation (2) sensiblement horizontal ou légèrement incliné par rapport à l'horizontale, sensiblement en forme d'enveloppe conique ou cylindrique, plongeant partiellement dans le liquide de rinçage (5), de sorte que le produit à nettoyer (6) puisse être rincé radialement à l'intérieur du crible (11, 30), substantiellement dans le sens axial (27), par le dispositif de crible (10) et que les impuretés (7) tombent vers le bas à travers le crible (11, 30), pour s'accumuler dans le réservoir séparateur (1),
- et avec un dispositif de transport (28) destiné au transport d'évacuation des impuretés (7) séparées du réservoir séparateur (1),
**caractérisé par le fait que** le réservoir séparateur (1) est disposé de manière rotative autour d'un axe (2) sensiblement horizontal ou légèrement incliné par rapport à l'horizontale et est muni, sur sa face intérieure, de poches de transport (28) destinées à recevoir les impuretés (7).

2. Dispositif séparateur selon la revendication 1, **caractérisé par le fait que** le réservoir séparateur rotatif (1) et le dispositif de crible rotatif (10) sont connectés entre eux de manière solidaire en rotation.

3. Dispositif séparateur selon la revendication 1 ou 2, **caractérisé par le fait que** les poches de transport (28) sont disposées dans une première zone latérale (21) du réservoir séparateur (1) limitée dans le sens axial et que le réservoir séparateur (1) présente un dispositif de transport (16) destiné à transporter le liquide de rinçage (5), chargé d'impuretés (7) et se trouvant à proximité du fond, en direction (19) de ladite première zone latérale (21).

4. Dispositif séparateur selon la revendication 3, **caractérisé par le fait que** le dispositif de transport comporte une première vis de transport (16) disposée sur la face intérieure radiale du réservoir séparateur (1) sensiblement en forme de tambour.

5. Dispositif séparateur selon la revendication 4, **caractérisé par le fait qu'**il est prévu, radialement à l'intérieur de la première vis de transport (16), une deuxième vis de transport, séparée de la première vis de transport (16) par un tambour intermédiaire (20), qui transporte le liquide de rinçage (5) chargé d'impuretés (7) tout d'abord dans le sens opposé au sens de transport (19) de la première vis de transport (16), en s'éloignant de la première zone latérale (21) munie des poches de transport (28) vers une deuxième zone latérale (22), située axialement opposée, du réservoir séparateur (1) présentant une connexion radiale entre les zones radiales (15, 23) des deux vis de transport, de sorte que le liquide de rinçage (5) soit ensuite transporté par la première vis de transport (16) vers la première zone latérale (21) munie de poches de transport (28).

6. Dispositif séparateur selon la revendication 5, **caractérisé par le fait qu'**à la première zone latérale (21) munie des poches de transport (28) vient se raccorder l'ouverture d'entrée (3) destinée à l'entrée du liquide de rinçage (5) chargé du produit (6) et des impuretés (7).

7. Dispositif séparateur selon la revendication 5, **caractérisé par le fait que** le liquide de rinçage (5) transporté par la première vis de transport (16) vers la première zone latérale (21) est détourné vers le haut dans la première zone latérale (21), de sorte que le flux orienté vers le haut se superpose au flux (27) sensiblement horizontal du liquide de rinçage (5) entrant à travers l'ouverture d'entrée (3).

8. Dispositif séparateur selon l'une des revendications précédentes, **caractérisé par le fait que** le crible (11) du dispositif de crible (10) se compose de barres disposées substantiellement à axes parallèles, en forme de tambour, des barres adjacentes limitant chaque fois un entrefer pour le passage de liquide de rinçage (5) et d'impuretés (7).

9. Dispositif séparateur selon l'une des revendications 1 à 7, **caractérisé par le fait que** le crible (30) du dispositif de crible (10) se compose de tôles perforées courbées.

10. Dispositif séparateur selon la revendication 9, **caractérisé par le fait qu'**il est prévu un dispositif de raclage (31) stationnaire, pénétrant à l'intérieur du crible (30), destiné à racler des matériaux adhérant à la face intérieure des tôles perforées.
